(19) Europäisches Patentamt
European Patent Office
Office européen des brevets

(11) Veröffentlichungsnummer: **0 222 697 B1**

(12) # EUROPÄISCHE PATENTSCHRIFT

(45) Veröffentlichungstag der Patentschrift: **29.01.92**

(51) Int. Cl.[5]: **C09B 67/48**, C09B 67/10, D06P 1/06, //C09B43/28, C09B31/065

(21) Anmeldenummer: **86810449.8**

(22) Anmeldetag: **09.10.86**

(54) **Modifizierter Säurefarbstoff.**

(30) Priorität: **15.10.85 US 787354**

(43) Veröffentlichungstag der Anmeldung:
**20.05.87 Patentblatt 87/21**

(45) Bekanntmachung des Hinweises auf die Patenterteilung:
**29.01.92 Patentblatt 92/05**

(84) Benannte Vertragsstaaten:
**BE CH DE ES FR GB IT LI**

(56) Entgegenhaltungen:
**EP-A- 0 033 297**
**EP-A- 0 139 294**
**DE-A- 2 524 187**
**FR-A- 2 030 035**

(73) Patentinhaber: **CIBA-GEIGY AG**
**Klybeckstrasse 141**
**CH-4002 Basel(CH)**

(72) Erfinder: **Höhener, Alfred, Dr.**
**Langweg 1**
**CH-4312 Magden(CH)**
Erfinder: **Smith, Roy E.**
**719 Viscount Drive**
**Toms River, NJ 08753(US)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft die Umwandlung der physikalischen Form eines Säurefarbstoffes in kristalline Formen, insbesondere in die sog. β-Kristallform, und ein Verfahren zur Herstellung dieser kristallinen Form (Modifikation).

Säurefarbstoffe werden entwickelt, um in einem Färbebad aus wässriger Lösung ein Substrat einzufärben. Bislang wird der speziellen Kristallform des Säurefarbstoffes keine Beachtung geschenkt, da die Anwendung aus wässriger Lösung erfolgt und über des Löslichkeitsverhalten verschiedener Kristallformen wenig bekannt ist. Bei der Synthese von Säurefarbstoffen und anderen wasserlöslichen Farbstoffen wird der Kristallform nur dann Aufmerksamkeit gewidmet, wenn es darum geht den Farbstoff in einer kristallinen Form zu erhalten, die es ermöglicht den Farbstoff aus der Reaktionsmasse in vernünftiger Ausbeute zu isolieren.

Im Gegensatz dazu werden die Kristallformen von Pigmentfarbstoffen intensiv untersucht, um gesuchte Farbnuancen, maximale Farbausbeute und geeignete Mittel zur Emulsionsstabilität zu erreichen; vgl. z.B. "The Chemistry and Physics of Organic Pigments", Lyde S. Pratt, John Wiley & Sons, Inc., New York, 1947. Vor wenigen Jahren wurde der Kristallform von Dispersionsfarbstoffen Beachtung geschenkt; dieses Interesse ist darin begründet, die Kristallform unter Färbebedingungen zu stabilisieren, wie dies z.B. aus den US-A-4.388.078, US-A-4.374.640 und US-A-4.332.588 und den dort angegebenen Literaturhinweisen bekannt ist. Die Modifikation eines Säurefarbstoffes ist lediglich aus der US-A-4.474.577 bekannt.

Die vorliegende Erfindung betrifft die Kristallisation und die Kristallmodifikationen des Farbstoffes der Formel

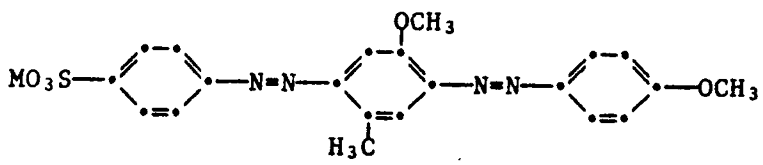 (1),

worin M ein Alkalimetall-, Erdalkalimetall- oder Ammonium-Ion ist, sowie ein Verfahren zur Herstellung der kristallinen Modifikationen, einschliesslich der bevorzugten kristallinen Modifikation, der β-Kristallform.

Als Alkalimetallion kommt das Lithium-, Natrium- oder Kaliumion in Betracht.

Als Erdalkalimetallion kommt das Magnesium-, Calzium-, Strontium-oder Bariumion in Betracht.

Bevorzugt ist M in Formel (1) ein Alkalimetallion, insbesondere das Natriumion.

Die besonders bevorzugten modifizierten Farbstoffkristalle des Natriumsalzes des Farbstoffes der Formel (1) sind durch ein Debye-Scherrer Röntgenbeugungsdiagramm charakterisiert, dessen Bragg-Winkel $2\theta$ und die relative Reflexionsstärke unten angegeben sind:

| β-Kristallform | | | ursprünglich bekannte Kristallform | | |
|---|---|---|---|---|---|
| $2\theta$ (°) | d (Å) | relative Reflexionsstärke | $2\theta$ (°) | d (Å) | relative Reflexionsstärke |
| 6,45 | 13,6 | mittel | 6,4 | 13,8 | sehr stark |
| 16,9 | 5,2 | sehr stark | 8,5 | 10,4 | mittel |
| 18,0 | 4,9 | stark | 15,6 | 5,7 | stark |
| 18,5 | 4,8 | stark | 18,2 | 4,9 | stark |
| 18,9 | 4,7 | stark | 18,6 | 4,77 | stark |
| 19,5 | 4,55 | mittel | 23,5 | 3,8 | mittel |
| 20,0 | 4,4 | mittel | 24,1 | 3,67 | mittel |
| 20,4 | 4,35 | mittel | | | |
| 23,6 | 3,8 | sehr stark | | | |
| 23,9 | 3,7 | mittel | | | |
| 30,3 | 2,95 | sehr stark | | | |

In der oben angegebenen Tabelle bedeutet $2\theta$ den BraggWinkel in Grad und d den Netzebenenabstand in Ångström.

Abbildung 1 zeigt das Röntgenbeugungsdiagramm der ß-Kristallform des Farbstoffes der Formel

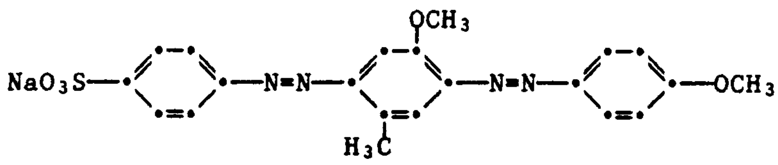
(2).

Die vorliegende Erfindung betrifft die Kristallisation und die Modifikation der Kristallstruktur des Farbstoffes der Formel (1), insbesondere des Farbstoffes der Formel (2). Kristallisation und Umwandlung wird erreicht durch die Heissbehandlung der wässrigen Dispersion des Farbstoffes in einem engen pH-Bereich. Unter den bisherigen Synthesebedingungen wird der Farbstoff in amorpher Form erhalten mit geringem oder gar keinem Anteil an einer Kristallform. Unter den Kristallisationsbedingungen zu der gewünschten Form, lässt sich der Farbstoff bei mikroskopischer Betrachtung durch das Auftreten gelber metallisch-glänzender Plättchen erkennen. Röntgenbeugungsdiagramme zeigen, dass bevor die β-Kristallform erreicht wird, intermediär Umwandlungen durchlaufen werden. Kristallbildung und Modifikation werden ferner bestätigt durch die Aenderung der optischen und coloristischen Eigenschaften, sowie durch mikroskopische Betrachtung, welche zeigt, dass der Farbstoff von der amorphen Form zu Kristallen, welche als Plättchen erscheinen, umgewandelt wird. Die β-Kristallform lässt sich besser filtrieren und waschen als die amorphe Form oder die anderen intermediär auftretenden Kristallformen. Der Farbstoff ist reiner, wenn er in der β-Kristallform isoliert wird, gegenüber der Isolierung in der amorphen Form oder einer anderen intermediär auftretenden Kristallform. Werden z.B. beide Formen, die amorphe Form und die β-Kristallform getrennt voneinander aus wässriger Lösung durch Filtrieren und Trocknen isoliert, so zeigt die β-Kristallform eine um 20 % grössere Farbstärke als die amorphe Form.

Ferner ist die β-Kristallform besser für die Verwendung in der Flüssigformulierung des Farbstoffes geeignet als die amorphe Form oder eine andere intermediär autretende Kristallform. Die β-Kristallform lässt sich schneller und leichter filtrieren, sie ergibt einen besseren Filterkuchen mit einem höheren Feststoffanteil. Der Filterkuchen der amorphen Form weist durchschnittlich 40 % Feststoffanteil auf, wohingegen der Feststoffanteil der modifizierten β-Form durchschnittlich 55 % oder mehr beträgt. Dies ist bei grosstechnischer Anwendung von grosser Bedeutung. Ferner ist es wichtig einen Filterkuchen mit hohem Feststoffanteil zu erhalten, weil dadurch die Möglichkeit gegeben ist, den Filterkuchen direkt zur Herstellung konzentrierter Flüssigformulierungen zu verwenden. Es ist ausserdem kostengünstiger einen hochkonzentrierten Kuchen zu trocknen, wenn die trockene Form gewünscht wird.

Die gesuchten Modifikationen werden erhalten, indem man die Farbstoffdispersion auf eine Temperatur zwischen 80 und 120 °C und einen pH-Bereich zwischen 8,5 und unter 10,0 unter Rühren erwärmt. Gegebenenfalls kann die Umwandlung unter Druck von beispielsweise bis zu 2,5 bar vorgenommen werden. Ein bevorzugter Temperaturbereich ist 90 bis 100 °C. Der bevorzugte pH-Bereich ist 8,5 bis 9,5. Erreicht der pH einen Wert über 9,5, so kann der Farbstoff in zu hohem Mass in Lösung vorliegen und wird somit nicht mehr von der Umwandlung beeinflusst. Sinkt der pH auf Werte unter 8, dann liegt der Farbstoff zum Teil in der Form der freien Säure vor, die zwar Kristallmodifikationen durchmacht, jedoch nicht zu den gewünschten Eigenschaften führt. Die Umwandlung zu der gewünschten Kristallform vollzieht sich sehr rasch wenn die angegebenen pH- und Temperatur-Werte erreicht sind. Die Umwandlung ist gewöhnlich innerhalb von ein bis zwei Stunden beendet, sie kann visuell an der metallisch-glänzenden sich frei bewegenden Suspension erkannt werden. Dies ist ein weiteres visuelles Unterscheidungsmerkmal:
der Wechsel vom Gel oder dem schwammartigen Erscheinungsbild zu einer frei-beweglichen Suspension niedriger Viskosität.

Die Konzentration der zu modifizierenden wässrigen Dispersion ist nicht kritisch, solange der Farbstoff nicht vollständig gelöst ist. Falls notwendig kann der Farbstoff-Dispersion Salz, z.B. Natriumchlorid, bei Erreichen der Umwandlungstemperatur zugesetzt werden, um den gelösten Farbstoffanteil niedrig zu halten. Normalerweise enthält die zur Umwandlung vorgesehene Dispersion bereits aus der Synthese des Farbstoffes genügend Salz, um ausreichende Unlöslichkeit, Vorliegen eines grösseren Anteils in Suspension, zu erreichen. Falls Bedarf an zusätzlichem Elektrolyt besteht, kann jeder übliche Elektrolyt verwendet werden. Obwohl Alkali- und Erdalkalimetallsalze von Mineralsäuren, wie z.B. Salzsäure und Schwefelsäure, aus ökonomischen Gründen bevorzugt sind, können auch Salze niedrigmolekularer organischer Säuren, wie z.B. Essigsäure, verwendet werden. Ammoniumsalze können ebenfalls eingesetzt werden, können jedoch aus ökologischer Sicht unerwünscht sein.

Im Verlauf des Herstellungsverfahrens des Farbstoffes der Formel (1) bzw. insbesondere der Formel (2) wird ein Gemisch aus Natriumchlorid und Natriumsulfat gebildet. Da das Herstellungsverfahren üblicherweise einen Methylierungsschritt enthält, kann in der Reaktionsmasse bei Verwendung von Dimethylsulfat als

Methylierungsmittel noch unumgesetztes Dimethylsulfat sowie Natriummethylsulfat vorhanden sein. In diesem Fall ist der Umwandlungsreaktion eine vollständige Hydrolyse vorzuschalten. Die Beendigung der vollständigen Hydrolyse kann an dem konstant bleibenden pH-Wert erkannt werden.

Die vorliegende Erfindung betrifft ferner das Verfahren der Kristallisation und Kristallmodifikation des Farbstoffes der Formel (1). Das Verfahren zur Durchführung der Kristallmodifikation ist dadurch gekennzeichnet, dass man eine wässrige Dispersion des Farbstoffes auf eine Temperatur zwischen 80 und 120° C gegebenenfalls unter Druck von bis zu 2.5 bar bei einem pH von 8,5 bis 9,5 erwärmt und gleichzeitig die Dispersion rührt. Die Umwandlung ist nach einer halben bis zu zwei Stunden beendet.

Vorzugsweise wird die Reaktionsmischung erwärmt nachdem die Herstellung des Farbstoffes der Formel (1) insbesondere des Farbstoffes der Formel (2) beendet ist. Die Kristallbildung und die Modifikation können jedoch an jeder Form des Farbstoffes durchgeführt werden. Der Filterkuchen, das getrocknete Rohprodukt oder das standardisierte Endprodukt können für die Umwandlung eingesetzt werden und unterscheiden sich nur durch die Menge an zusätzlich benötigtem Salz zu der wässrigen Dispersion, die notwendig ist, um die vollständige Lösung des Farbstoffes zu verhindern. Die Einstellung des pH-Wertes von 8,5 bis 9,5 in dem erfindungsgemässen Verfahren erfolgt z.B. mittels Alkalihydroxiden oder Alkalihydrogencarbonaten oder auch mit Säuren, je nach pH-Wert vor der Umwandlung. Als Beispiele seien Natriumhydroxid, Natriumhydrogencarbonat und Salzsäure genannt. Eine bevorzugte Temperatur für die Umwandlung ist 80 bis 100° C, insbesondere 90 bis 100° C und ganz besonders bevorzugt um 90° C.

Ein weiterer Gegenstand der vorliegenden Erfindung ist eine Mischung von Farbstoffen der Formel (1), insbesondere von Farbstoffen der Formel (2), aus verschiedenen Formen dieser Farbstoffe, wobei der Anteil der $\beta$-Kristallform mindestens 50 Gewichtsprozent beträgt. Die Herstellung der erfindungsgemässen Mischung erfolgt gemäss den oben angegebenen Bedingungen, wobei die Umwandlung z.B. in Gegenwart eines grossen Anteils des Farbstoffes in Lösung erfolgt; der Rohfarbstoff eine geringe Salzmenge enthält; oder die Umwandlung nach kurzer Zeit beendet wird. Die erfindungsgemässe Mischung mit einem Gewichtsanteil von mindestens 50 % an der $\beta$-Kristallform zeichnet sich gegenüber der bekannten amorphen Form durch die vorstehend angegebenen Vorteile aus.

Der kristalline Säurefarbstoff der Formel (1) und die erfindungsgemässe Mischung eignen sich zum Färben und Bedrucken der verschiedensten textilen Fasermaterialien, insbesondere Leder, Seide, Wolle und synthetische Polyamidfasermaterialien. Besonders bevorzugte Fasern sind Wolle und insbesondere Polyamid-6 und Polyamid-66.

Die folgenden Beispiele sollen die Erfindung illustrieren ohne sie darauf zu beschränken. Die Temperaturen sind in Celsiusgraden angegeben. Die Beziehung zwischen Gewichtsteilen und Volumenteilen ist dieselbe wie diejenige zwischen Gramm und Kubikzentimeter.

Beispiel 1:

Der Farbstoff der Formel

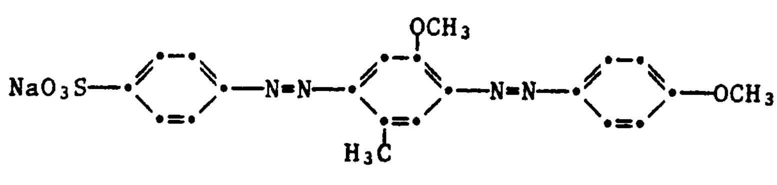

wird gemäss den Angaben der US-A-3,862,119 hergestellt. Vorzugsweise wird der Farbstoff der oben angegebenen Formel in Analogie zu den Angaben der US-A-3,862,119 hergestellt, indem nämlich eine äquivalente Menge Dimethylsulfat anstelle von Methylchlorid verwendet wird. Ohne den methylierten Farbstoff zu isolieren und in Gegenwart eines kleinen Ueberschusses an Dimethylsulfat wird die Reaktionslösung direkt der Umwandlung zur Herstellung der $\beta$-Kristallform unterworfen.

Die Reaktionsmasse, enthaltend ungefähr 10 Teile Farbstoff und 8 bis 10 Teile Salz (Natriumchlorid und Natriumsulfat) sowie Nebenprodukte in einem Volumen von 100 Teilen als wässrige Suspension bei einem pH-Wert von 10 bis 11, wird auf 90° erwärmt und bei dieser Temperatur gehalten bis der pH-Wert sich stabilisiert hat, d.h. bis der Ueberschuss an Dimethylsulfat hydrolysiert ist. Dann wird der pH-Wert auf 8,5 bis 9,5 eingestellt und die Dispersion auf 90 bis 95° während einer Stunde erwärmt bis die $\beta$-Kristallform vorliegt.

Visuell ist die Aenderung der Form nach einer halben Stunde nach Erreichen der angegebenen Temperatur feststellbar. Nach einer vollen Stunde (unter ständigem Rühren) ist keine Aenderung mehr

feststellbar; zu diesem Zeitpunkt zeigt die mikroskopische Analyse nur das Vorliegen von Plättchen. Die modifizierte Form, die β-Kristallform, wird isoliert durch langsames Abkühlen auf 70° und anschliessender Filtration. Die Filtrationszeit beträgt weniger als eine Minute (#3 Whatman Filter, 12 cm Durchmesser, 0,81 bar). Der Feststoffanteil des Filterkuchens wird durch Trocknung bestimmt und beträgt 55 %.

Beispiel 2:

100 Teile des Filterkuchens der amorphen Form des Farbstoffes der in Beispiel 1 angegebenen Formel mit einem Feststoffanteil von 45 % werden in 300 Teilen Wasser verrührt. Das Volumen wird auf 450 Teile gestellt und der pH-Wert auf 9,5 eingestellt. Die Lösung wird auf 90° erwärmt und bei dieser Temperatur werden 45 Teile Natriumchlorid zugesetzt. Der Farbstoff fällt in der amorphen Form aus. Nachdem man das Medium und den Niederschlag während einer Stunde auf 90° gehalten hat, wird die β-Kristallform durch Filtration isoliert (#3 Whatman Filter, 12 cm Durchmesser, Filtrierzeit unter einer Minute). Der Filterkuchen wird mit 100 Teilen einer Lösung enthaltend 1 % Natriumchlorid gewaschen. Es werden 78 Teile der β-Kristallform erhalten mit einem Feststoffanteil des Filterkuchens von 55 % und einer gegenüber der amorphen Form um 20 % verbesserten Farbausbeute.

Verwendung findet die β-Kristallform des angegebenen Farbstoffes z.B. bei der Bereitung von Flüssigformulierungen.

Beispiel 3:

Der Farbstoff der Formel

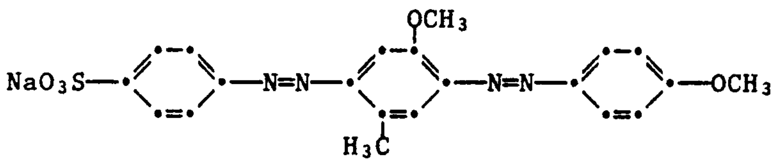

wird gemäss den Angaben der US-A-3,862,119 hergestellt, wobei eine äquivalente Menge Dimethylsulfat anstelle von Methylchlorid verwendet wird. Die Methylierung erfolgt bei 40 bis 45° und einem pH-Wert von 10,5 bis 11. Ohne den methylierten Farbstoff zu isolieren und in Gegenwart eines kleinen Ueberschusses an Dimethylsulfat wird die Reaktionslösung auf 90° erwärmt, wobei der pH-Wert auf ca. 9,8 bis 10 fällt. Man hält den pH-Wert bei 9,8 bis 10 und rührt während 2 Stunden bei 90 bis 95°. Anschliessend wird für 3 Stunden der pH-Wert auf 9,3 bis 9,5 eingestellt und die Temperatur auf 98 bis 100° erhöht. Dann lässt man unter Rühren auf ca. 80° abkühlen und hält den pH-Wert bei 9,3 bis 9,5 [die Einhaltungg des pH-Wert erfolgt mit ca.50%iger Natriumcarbonatlösung oder 33%-iger Salzsäure]. Anschliessend wird filtriert und der Filterkuchen mit einer 1%-igen Natriumchloridlösung gewaschen. Der erhaltene Farbstoff mit einem Feststoffanteil des Filterkuchens von ca. 55 % weist eine gegenüber der amorphen Form um 20 % verbesserte Farbausbeute auf.

**Patentansprüche**

**1.** Kristalline Form des Farbstoffes der Formel

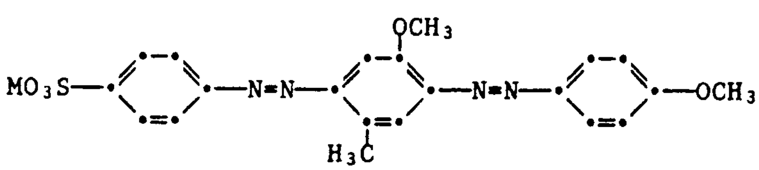 (1),

worin M ein Alkalimetall-, Erdalkalimetall- oder Ammonium-Ion ist, erhältlich dadurch, dass man das Alkalimetall-, Erdalkalimetall-oder Ammoniumsalz des Farbstoffes der Formel (1) in wässriger Dispersion bei einer Temperatur von 80 bis 120°C und einem pH-Wert von 8,5 bis 9,5 gegebenenfalls unter Druck rührt.

2. Kristalline Form des Farbstoffes der Formel (1) gemäss Anspruch 1, dadurch gekennzeichnet, dass M das Alkalimetallsalz, insbesondere das Natriumsalz des Farbstoffes der Formel (1) ist.

3. Kristalline Form des Farbstoffes der Formel

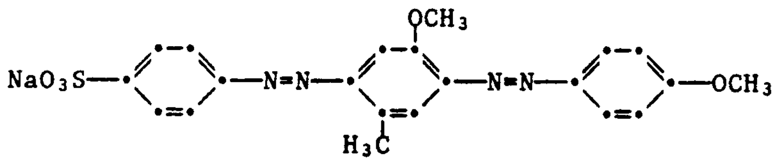

(2)

charakterisiert durch ein Debye-Scherrer Röntgenbeugungsdiagramm mit repräsentativen Reflexionen der d-Abstände in Å: 13,6 (mittel), 5,2 (sehr stark), 4,9 (sehr stark), 4,8 (stark), 4,7 (stark), 4,55 (mittel), 4,4 (mittel), 4,35 (mittel), 3,8 (sehr stark), 3,7 (mittel), 2,95 (sehr stark).

4. Die $\beta$-Kristallform des Farbstoffes der Formel

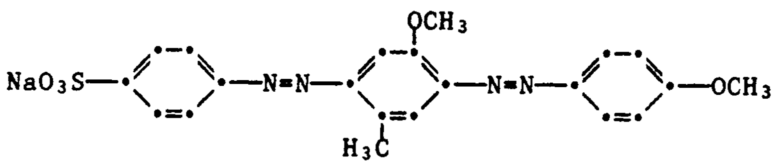

(2)

charakterisiert durch das Röntgenbeugungsdiagramm gemäss Abbildung 1.

5. Mischung von kristallinen und amorphen Formen des Farbstoffes der Formel

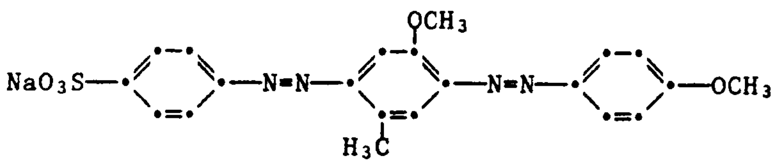

(2)

dadurch gekennzeichnet, dass die Mischung mindestens 50 Gewichtsprozent der $\beta$-Kristallform gemäss Anspruch 4 enthält.

6. Verfahren zur Herstellung einer kristallinen Form des Farbstoffes der Formel

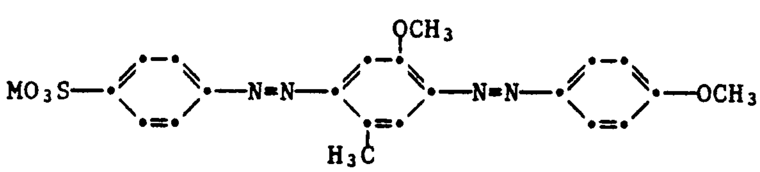

(1),

worin M ein Alkalimetall-, Erdalkalimetall- oder Ammonium-Ion ist, dadurch gekennzeichnet, dass man eine wässrige Suspension des Farbstoffes bei einem pH-Wert zwischen 8,5 und 9,5 und bei einer Temperatur zwischen 80 und 120 °C gegebenenfalls unter Druck rührt.

7. Verfahren zur Herstellung einer kristallinen Form des Farbstoffes der Formel

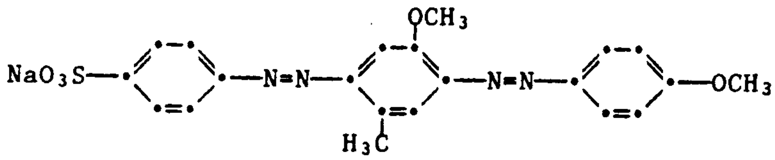

(2)

dadurch gekennzeichnet, dass man eine wässrige Suspension des Farbstoffes bei einem pH-Wert zwischen 8,5 und 9,5 und bei einer Temperatur zwischen 80 und 120°C gegebenenfalls unter Druck solange rührt bis der Farbstoff in der Form von Plättchen vorliegt.

**8.** Verfahren gemäss Anspruch 7, dadurch gekennzeichnet, dass man bei einer Temperatur zwischen 80 und 100°C ohne Druck rührt.

**9.** Verfahren gemäss Anspruch 8, dadurch gekennzeichnet, dass man bei einer Temperatur zwischen 90 und 100°C, insbesondere um 90°C, arbeitet.

**10.** Verwendung der kristallinen Form des Farbstoffes der Formel (1) bzw. (2) gemäss einem der Ansprüche 1 bis 4 oder der Mischung gemäss Anspruch 5 oder der gemäss Anspruch 6 erhaltenen Form zum Färben oder Bedrucken textiler Fasermaterialien.

**Claims**

**1.** A crystalline form of the dye of the formula

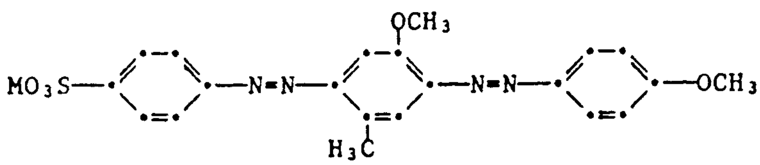

(1),

in which M is an alkali metal ion, an alkaline earth metal ion or ammonium ion, obtainable by stirring the alkali metal salt, alkaline earth metal salt or the ammonium salt of the dye of formula (1) in aqueous dispersion at a temperature of 80 to 120°C and a pH of 8.5 to 9.5, optionally under pressure.

**2.** A crystalline form of the dye of formula (1) according to claim 1, wherein M is the alkali metal salt, especially the sodium salt, of the dye of formula (1).

**3.** A crystalline form of the dye of the formula

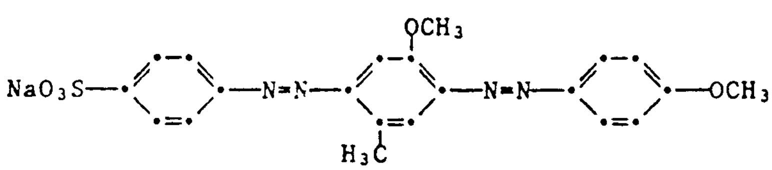

(2),

distinguished by a Debye-Scherrer X-ray diffraction pattern with reflections representative of d-spacings (Å) as follows: 13.6 (medium), 5.2 (very strong), 4.9 (very strong), 4.8 (strong), 4.7 (strong), 4.55 (medium), 4.4 (medium), 4.35 (medium), 3.8 (very strong), 3.7 (medium), 2.95 (very strong).

**4.** A $\beta$-crystalline form of the dye of the formula

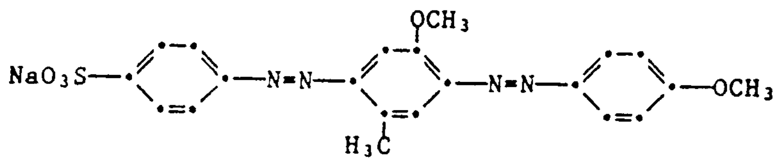 (2),

distinguished by the X-ray diffraction pattern of Figure 1.

**5.** A mixture of crystalline and amorphous forms of the dye of the formula

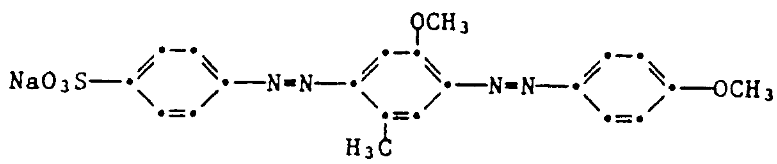 (2),

wherein the amount of the $\beta$-crystalline form according to claim 4 in the mixture is at least 50 per cent by weight.

**6.** A process for producing a crystalline form of the dye of the formula

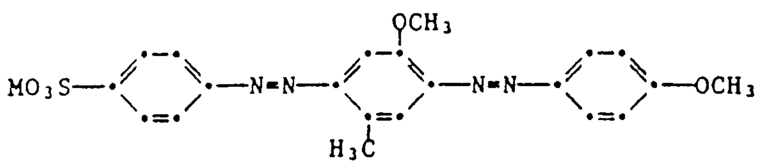 (1),

wherein M is an alkali metal ion, alkaline earth metal ion or ammonium ion, which comprises stirring an aqueous suspension of the dye at a pH between 8.5 and 9.5 and at a temperature between 80 and 120 °C, optionally under pressure.

**7.** A process for producing a crystalline form of the dye of the formula

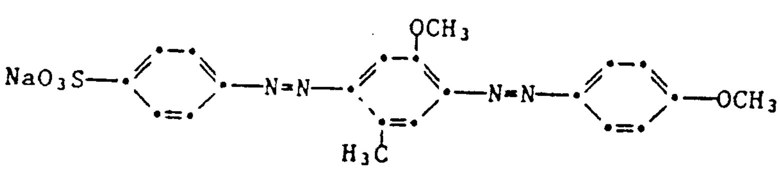 (2),

which comprises stirring an aqueous suspension of the dye at a pH between 8.5 and 9.5 and at a temperature between 80 and 120 °C, optionally under pressure, until the dye is in the form of platelets.

**8.** A process according to claim 7, which comprises stirring at a temperature between 80 and 100 °C without pressure.

**9.** A process according to claim 8, which comprises operating at a temperature between 90 and 100 °C, especially about 90 °C.

**10.** Use of the crystalline form of the dye of formula (1) or formula (2) according to one of claims 1 to 4 or of the mixture according to claim 5 or of the form obtained according to claim 6 for dyeing or printing textile fibre materials.

**Revendications**

**1.** Forme cristalline du colorant de formule

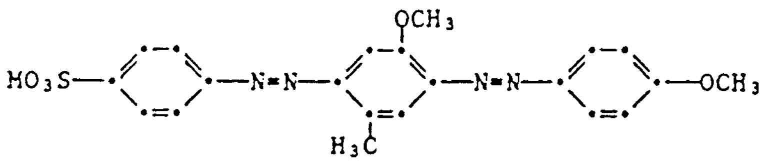

(1),

dans laquelle M représente un ion de métal alcalin, de métal alcalino-terreux ou ammonium, que l'on peut obtenir en agitant le sel de métal alcalin, de métal alcalino-terreux ou d'ammonium du colorant de formule (1), en dispersion aqueuse, à une température de 80 à 120°C, à un pH de 8,5 à 9,5 et éventuellement sous pression.

**2.** Forme cristalline du colorant de formule (1), selon la revendication 1, caractérisée en ce qu'il s'agit du sel de métal alcalin, en particulier du sel de sodium, du colorant de formule (1).

**3.** Forme cristalline du colorant de formule

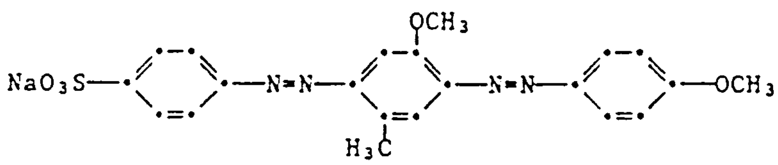

(2)

caractérisée par un diagramme Debye-Scherrer de diffraction des rayons X présentant des réflexions représentatives pour les distances d, en angströms : 13,6 (moyenne), 5,2 (très forte), 4,9 (très forte), 4,8 (forte), 4,7 (forte), 4,55 (moyenne), 4,4 (moyenne), 4,35 (moyenne), 3,8 (très forte), 3,7 (moyenne) et 2,95 (très forte).

**4.** Variété cristalline *β* du colorant de formule

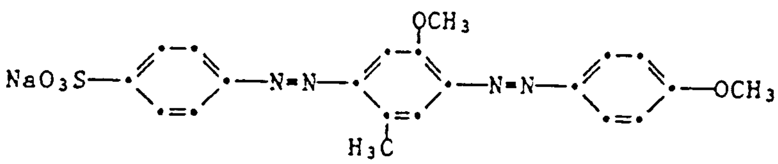

(2)

caractérisée par le diagramme de diffraction des rayons X représenté sur la figure 1.

**5.** Mélange des formes cristalline et amorphe du colorant de formule

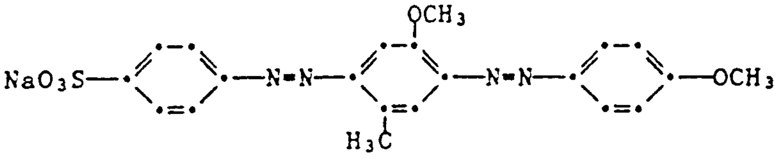

(2)

caractérisé en ce que ce mélange contient au moins 50 % en poids de la variété cristalline *β* conforme à la revendication 4.

**6.** Procédé de préparation d'une forme cristalline du colorant de formule

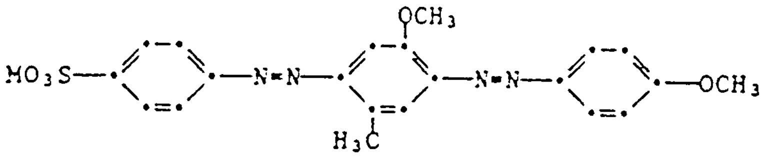

(1),

dans laquelle M représente un ion de métal alcalin, un ion de métal alcalino-terreux ou un ion ammonium, caractérisé en ce que l'on agite une suspension aqueuse du colorant, à un pH compris entre 8,5 et 9,5 et à une température comprise en 80 et 120 ° C, et éventuellement sous pression.

**7.** Procédé de préparation d'une forme cristalline du colorant de formule

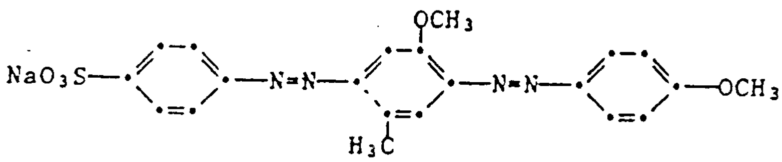

(2)

caractérisé en ce que l'on agite une suspension aqueuse du colorant, à un pH compris entre 8,5 et 9,5 et à une température comprise entre 80 et 120 ° C, et éventuellement sous pression, jusqu'à ce que le colorant apparaisse sous la forme de plaquettes.

**8.** Procédé conforme à la revendication 7, caractérisé en ce que l'on opère à une température située entre 80 et 100 ° C, et sans pression.

**9.** Procédé conforme à la revendication 8, caractérisé en ce que l'on opère à une température comprise entre 90 et 100 ° C, et en particulier autour de 90 ° C.

**10.** Utilisation de la forme cristalline du colorant de formule (1) ou (2), conforme à l'une quelconque des revendications 1 à 4, ou du mélange conforme à la revendication 5, ou de la forme obtenue selon la revendication 6, pour teindre ou imprimer des matières fibreuses textiles.

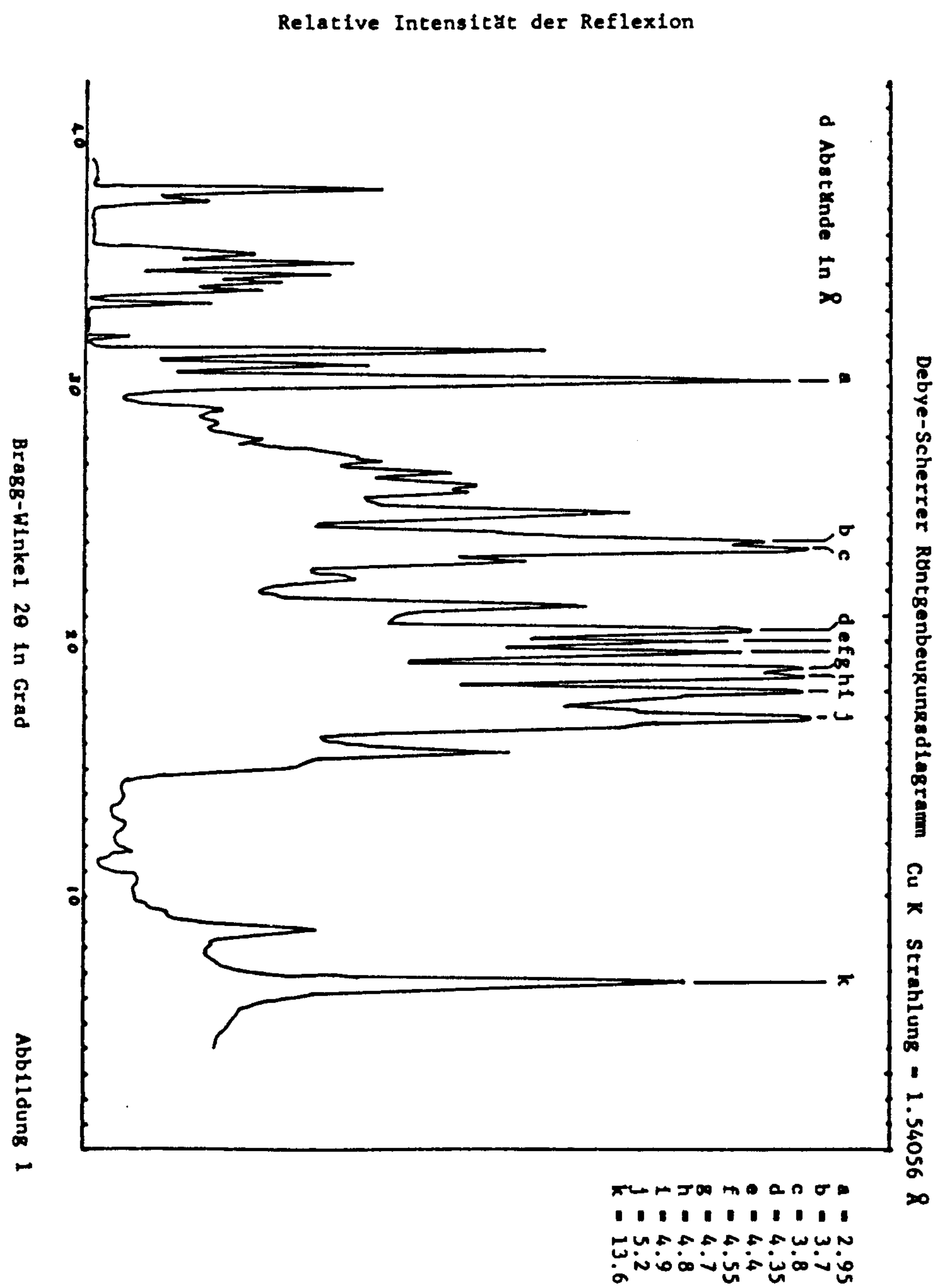
Relative Intensität der Reflexion
Neue Kristallform
Debye-Scherrer Röntgenbeugungsdiagramm Cu K Strahlung = 1.54056 Å
d Abstände in Å
a
b c
d e f g h i j
k
40
30
20
10
Bragg-Winkel 2θ in Grad
a = 2.95
b = 3.7
c = 3.8
d = 4.35
e = 4.4
f = 4.55
g = 4.7
h = 4.8
i = 4.9
j = 5.2
k = 13.6
Abbildung 1